# EUROPÄISCHE PATENTSCHRIFT

(11) **EP 3 383 676 B1**
(45) Veröffentlichungstag und Bekanntmachung des Hinweises auf die Patenterteilung: **11.12.2019**
(21) Anmeldenummer: 16779104.5
(22) Anmeldetag: 11.10.2016
(51) Int. Cl.: B60C 11/12, B60C 11/03

(54) **FAHRZEUGLUFTREIFEN**
PNEUMATIC VEHICLE TIRE
PNEUMATIQUE DE VÉHICULE

(30) Priorität: 04.12.2015 DE 102015224290
(43) Veröffentlichungstag der Anmeldung: 10.10.2018
(73) Patentinhaber: Continental Reifen Deutschland GmbH, 30165 Hannover (DE)
(72) Erfinder: BROCKMANN, Jürgen, 30171 Hannover (DE); DIENSTHUBER, Franz, 60528 Frankfurt (DE); SENG, Matthias, 30453 Hannover (DE)
(74) Vertreter: Finger, Karsten
(86) Internationale Anmeldenummer: PCT/EP2016/074281
(87) Internationale Veröffentlichungsnummer: WO 2017/092915

(56) Entgegenhaltungen:
- EP-A1- 1 829 712
- FR-A1- 3 014 750
- JP-A- H07 186 633

## Beschreibung

Die Erfindung betrifft einen Fahrzeugluftreifen für Personenkraftwagen, insbesondere für den Einsatz unter winterlichen Fahrbedingungen, mit einem Laufstreifen mit Profilpositiven, insbesondere Profilblöcken, sowie mit Profilnegativen, insbesondere Umfangsrillen, Querrillen oder Diagonalrillen, wobei in den Profilpositiven jeweils eine Anzahl von parallel zueinander verlaufenden Einschnitten mit einer Breite von 0,4 mm bis 0,6 mm ausgebildet ist, die sich unter einem Winkel ≥ 50° zur Umfangsrichtung des Laufstreifens erstrecken, wobei zumindest in den im mittleren Bereich des Laufstreifens angeordneten Profilpositiven weitere, die Profilpositive durchquerende, geradlinig verlaufende Einschnitte ausgebildet sind, welche eine Tiefe von 0,2 mm bis 0,5 mm aufweisen und in jedem Profilpositiv parallel zueinander verlaufen.

Ein Fahrzeugluftreifen der eingangs genannten Art ist beispielsweise aus der JP H07 186 633 A bekannt. Der Laufstreifen dieses Fahrzeugluftreifens weist Profilblöcke auf, welche mit in axialer Richtung verlaufenden Einschnitten versehen sind und auf ihrer an der Laufstreifenperipherie befindlichen Außenfläche gerippt ausgeführt sind. Zwischen den in Umfangsrichtung verlaufende, ein Breite von 5µm bis 2,0 mm aufweisenden Rippen befinden sich Vertiefungen, welche eine Breite von 5 µm bis 1,5 mm, insbesondere von 10 µm bis 1,0 mm, und eine Tiefe von 5 µm bis 1,0 mm, insbesondere von 20µm bis 300 µm, aufweisen. Beim Fahren auf mit Schnee und/oder Eis bedeckten Fahrbahnen soll die gerippte Ausgestaltung ein Ableiten von Wasser begünstigen.

Aus der US 2016/0311266 A1 ist ein Fahrzeugluftreifen mit einem Laufstreifen mit Profilblöcken bekannt, welche mit im Wesentlichen in axialer Richtung verlaufenden Einschnitten versehen sind. Ferner sind diese Einschnitte kreuzende Einschnitte vorgesehen, welche eine Tiefe und eine Breite von jeweils 0,1 mm bis 0,8 mm aufweisen und zur Umfangsrichtung unter einem Winkel von höchstens 20°, insbesondere von kleiner gleich 10°, verlaufen. Die Einschnitte weisen voneinander einen Normalabstand von 0,3 mm bis 2,0 mm auf.

Ferner ist aus der EP 1 829 712 A1 ein Fahrzeugluftreifen mit einem Laufstreifen mit Profilpositiven bekannt, welche mit im Wesentlichen in axialer Richtung verlaufenden Einschnitten versehen sind. Die Profilpositive weisen weitere Einschnitte auf, welche eine Tiefe von 0,1 mm bis 0,5mm und eine Breite von 0,1 mm bis 1,0 mm besitzen und in Umfangsrichtung oder zu dieser unter einem Winkel von 45° verlaufen.

Es ist bekannt und üblich, PKW-Winterreifen mit einem Laufstreifen zu versehen, dessen Profilpositive, meist Profilblöcke, jeweils eine Vielzahl von in jedem Profilpositiv parallel zueinander und im Wesentlichen in axialer Richtung verlaufenden Einschnitten aufweisen. Die Vielzahl an solchen Einschnitten im Laufstreifen sorgt durch ein Verformen der einzelnen, durch die Einschnitte in den Profilpositiven gebildeten Profilpositivelemente für gute Griffeigenschaften sowie gute Brems- und Traktionseigenschaften auf schneeigem und eisigem Untergrund. Fahrzeugluftreifen im Neuzustand weisen nun üblicherweise eine sehr glatte Oberfläche auf, sodass auf glatter und vereister Fahrbahn die Eisperformance gegenüber einem eingefahrenen, oberflächlich bereits abgeriebenen Reifen schlechter ist. Beim Ändern des Fahrzustandes auf eisigem Untergrund, beispielsweise beim Bremsen oder beim Beschleunigen, schmilzt oberflächlich Eis durch die entstehende Reibungswärme. Dabei bildet sich ein dünner Wasserfilm bzw. eine dünne Wasserschicht, der bzw. die von Laufstreifen von bereits leicht abgefahrenen Reifen durch Abriebunregelmäßigkeiten und eine rauer gewordene Oberfläche aufgenommen werden kann. Die sehr glatte Oberfläche eines Neureifens ist dazu nicht in der Lage. Auch die in den Profilpositiven vorhandenen Einschnitte sind dazu kaum in der Lage, da sich die einzelnen Profilpositivelemente durch Umfangskräfte verformen und aneinander legen.

Der Erfindung liegt daher die Aufgabe zu Grunde, bei einem Reifen der eingangs genannten Art die Eisperformance des Reifens im Neuzustand zu verbessern, im Wesentlichen bis der Reifen seine maximale Eisperformance durch oberflächlichen Abrieb erreicht hat.

Gelöst wird die gestellte Aufgabe erfindungsgemäß dadurch, dass die weiteren Einschnitte eine Breite von 0, 2mm bis 0,5 mm aufweisen und zur Umfangsrichtung unter einem Winkel von ±5° bis ±15° verlaufen, wobei der Normalabstand der in einem Profilpositiv parallel zueinander verlaufenden weiteren Einschnitte 5 mm bis 14 mm beträgt.

Die gemäß der Erfindung im Laufstreifen ausgebildeten weiteren Einschnitte ersetzen bei neuem Reifen die Rauigkeit von Laufstreifen von bereits gefahrenen Reifen. Um diesen Effekt aufzuweisen, ist es erforderlich, dass die weiteren Einschnitte möglichst schmal sind, um die Nettokontaktfläche des Laufstreifens so gut wie nicht zu beeinträchtigen. Des Weiteren sollen die weiteren Einschnitte möglichst seicht sein, um auch die Laufstreifenquersteifigkeit und damit die Handlingeigenschaften nicht zu beeinflussen. Die lediglich leichte Neigung der Erstreckung dieser weiteren Einschnitte zur Umfangsrichtung ist vorteilhaft, weil die meisten Fahrzustandsänderungen in Umfangsrichtung oder nur leicht von dieser abweichend erfolgen, etwa bei Geradeausfahrt oder beim Fahren von Kurven mit größerem Radius. Da die weiteren Einschnitte die Profilpositive durchqueren, können sie dafür sorgen, dass von ihnen nicht aufgenommenes überschüssiges Wasser in die das Profilpositiv begrenzenden Rillen abgeleitet wird.

Besonders vorteilhaft ist eine Ausführung, bei der die weiteren Einschnitte in sämtlichen Profilpositiven ausgebildet sind. Sie können daher ihre Wirkung bei allen möglichen Fahrzuständen, sei es Geradeausfahrt, Kurvenfahrt, beim Bremsen und Beschleunigen, sehr gut entfalten.

Wie bereits erwähnt, ist es besonders günstig, wenn die weiteren Einschnitte möglichst schmal und möglichst seicht sind. Bei einer bevorzugten Ausführungsform der Erfindung betragen daher die Tiefe und die Breite der weiteren Einschnitte jeweils ≤ 0,4 mm. Besonders günstig ist es ferner, wenn die weiteren Einschnitte in sämtlichen Profilpositiven einer Laufstreifenhälfte parallel zueinander verlaufen und wenn ferner der Normalabstand der in einem Profilpositiv parallel zueinander verlaufenden weiteren Einschnitte maximal 10 mm beträgt.

Ein möglichst großes Wasseraufnahmevermögen weisen ferner solche Einschnitte auf, die im Querschnitt zumindest annähernd rechteckig, insbesondere zumindest annähernd quadratisch, sind.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf eine Teilabwicklung eines Laufstreifens eines Fahrzeugluftreifens und
Fig. 2 einen Schnitt entlang der Linie II-II der Fig. 1 in vergrößerter Darstellung.

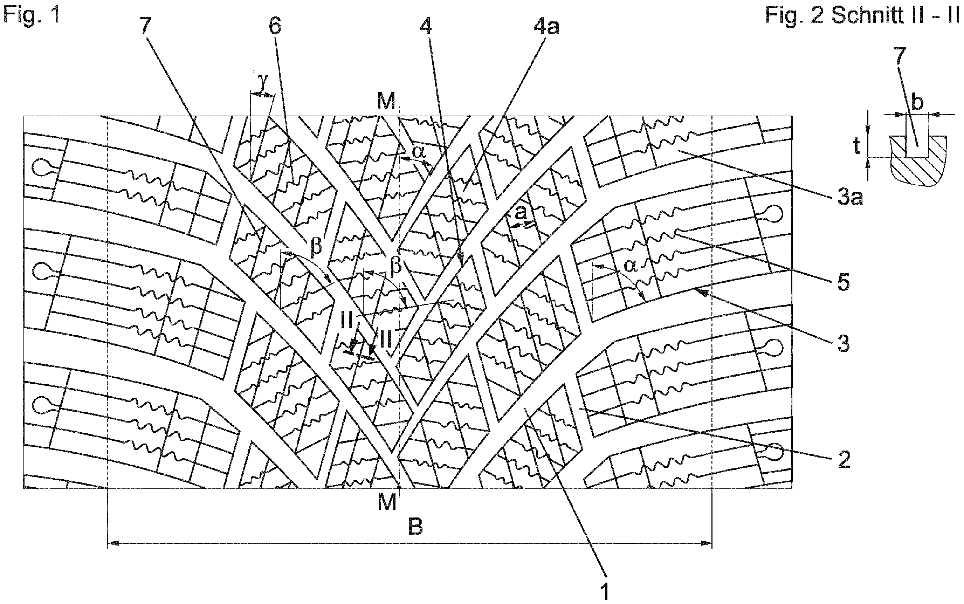

Der in Fig. 1 gezeigte Laufstreifen ist für Fahrzeugluftreifen von Personenkraftwagen, Vans oder dergleichen vorgesehen, insbesondere für den Einsatz unter winterlichen Fahrbedingungen, und ist laufrichtungsgebunden ausgeführt. Die Erfindung ist jedoch nicht auf laufrichtungsgebunden ausgestaltete Laufstreifen beschränkt. Mit B ist die Breite des bodenberührenden Teils des Laufstreifens bezeichnet, also jene Breite, über welche der Reifen beim Abrollen mit dem Untergrund in Kontakt tritt. Der bodenberührende Teil des Laufstreifen entspricht dem statisch ermittelten Footprint gemäß E.T.R.T.O.-Standards (Last bei 70 % der Tragfähigkeit bei einem Innendruck von 2,5 bar, Innendruck 85 % von 2,5 bar).

Beim dargestellten Ausführungsbeispiel ist der Laufstreifen über seine Breite B mit V-förmig verlaufenden Diagonalrillen 1 versehen und durch zwischen benachbarten Diagonalrillen 1 verlaufende Umfangsrillen 2 in schulterseitige Profilblöcke 3 und in im mittleren Bereich des Laufstreifens angeordnete mittige Profilblöcke 4 gegliedert. Die Diagonalrillen 1 sind die Hauptrillen des Laufstreifens und verlaufen im zentralen Bereich des Laufstreifens, im Bereich ihrer hier verlaufenden Endabschnitte, unter einem Winkel α ≤ 60°, bei der gezeigten Ausführung von etwa 35°, zur Umfangsrichtung. In Richtung zu den Laufstreifenrändern wird der Winkel α zunehmend größer, sodass die Diagonalrillen 1 zwischen den schulterseitigen Profilblöcken 3 unter einem Winkel α von 70° bis 90° zur Umfangsrichtung verlaufen. Die in der einen Laufstreifenhälfte verlaufenden Diagonalrillen 1 sind gegenüber jenen, die in der anderen Laufstreifenhälfte verlaufen, in Umfangsrichtung etwas versetzt, wobei im zentralen Bereich des Laufstreifens die Diagonalrillen 1 ineinander münden. Dabei erstrecken sich die Diagonalrillen 1 jeweils über die Umfangsmittellinie M-M etwas hinaus. In bekannter Weise weisen ferner die Diagonalrillen 1 im Laufstreifenzentrum eine geringere Breite auf als schulterseitig, wobei die Breite vom zentralen Bereich in Richtung Laufstreifenränder zumindest im Wesentlichen kontinuierlich größer wird. Die Profilstrukturen, die Diagonalrillen 1 und die Profilblöcke 3, 4, sind gemäß einem Verfahren der Pitchlängenvariation geräuschoptimiert ausgelegt und weisen daher zumindest zwei unterschiedliche Pitchlängen auf, wobei die Aufeinanderfolge der sich über den Umfang angeordneten Pitches, wie an sich bekannt, gemäß einer rechnerisch ermittelten Pitchfolge erfolgt. Die diesbezüglichen Maßnahmen sind nicht Gegenstand dieser Erfindung, sodass auf sie nicht eingegangen wird.

Bei einer nicht laufrichtungsgebundenen Ausführung des Laufstreifens können die Diagonalrillen 1 über die Laufstreifenbreite B beispielsweise entlang von schwach S-förmig gekrümmten Kurven verlaufen.

Ein Reifen mit dem durch den dargestellten Verlauf der Diagonalrillen 1 laufrichtungsgebunden ausgeführten Laufstreifen ist derart am Fahrzeug zu montieren, dass die laufstreifeninnenseitigen Enden der Diagonalrillen 1 beim Abrollen des Reifens bei Vorwärtsfahrt zuerst in den Untergrund eintreten.

Die schulterseitigen Profilblöcke 3 sind jeweils mit einer Anzahl von sich zumindest im Wesentlichen parallel zueinander und parallel zu den zwischen den Profilblöcken 3 verlaufenden Diagonalrillen 1 erstreckenden Einschnitten 5 versehen, welche die schulterseitigen Profilblöcke 3 in Profilblockelemente 3a gliedern. Bei der in Fig. 1 gezeigten Ausführung verlaufen die Einschnitte 5 in Draufsicht abschnittsweise wellen- bzw. zickzackförmig, können jedoch auch geradlinig verlaufen. Auch in den mittigen Profilblöcken 4 sind diese in Profilblockelemente 4a gliedernde, bei der gezeigten Ausführung abschnittsweise wellen- bzw. zickzackförmig verlaufende Einschnitte 6 ausgebildet, welche sich in jedem Profilblock 4 ebenfalls parallel zueinander erstrecken, wobei sie in jeder Laufstreifenhälfte gegensinnig zu den Diagonalrillen 1 und dabei unter einem Winkel β ≥ 50° zur Umfangsrichtung verlaufen. Die Einschnitte 5, 6 weisen insbesondere die bei Winterreifen übliche Breite von 0,4 mm bis 0,6 mm auf.

Bei neuem Reifen ist die sehr glatte Oberfläche der Profilpositive, bei der gezeigten Ausführung der Profilblöcke 3 und 4, kaum in der Lage, das beim Ändern eines Fahrzustandes auf eisigem Untergrund, insbesondere beim Bremsen oder Anfahren, durch die entstehende Reibungswärme oberflächlich schmelzende Eis bzw. den dadurch entstehenden dünnen Wasserfilm aufzunehmen. Es ist daher die Eisperformance eines Neureifens gegenüber einem bereits eingefahrenen, oberflächlich abgeriebenen Reifen schlechter. Gemäß der Erfindung sind daher zumindest die mittigen Profilblöcke 4, vorzugsweise auch die Profilblöcke 3, mit annähernd in Umfangsrichtung verlaufenden sehr schmalen und sehr seichten weiteren Einschnitten 7 versehen, welche die Profilblöcke 3, 4 durchqueren und sich daher von Diagonalrille 1 zu Diagonalrille 1 erstrecken. Zu etwaigen Umfangsrillen 2 weisen die weiteren Einschnitte 7 einen Mindestabstand von 4 mm auf. Die weiteren Einschnitte 7 bilden gemeinsam mit den Einschnitten 5, 6 einen Einschnittraster. Die weiteren Einschnitte 7 verlaufen geradlinig unter einem Winkel γ von ± 5° bis ± 15° zur Umfangsrichtung, weisen eine über ihre Erstreckung konstante Breite b und eine konstante Tiefe t von jeweils 0,2 mm bis 0,5 mm, insbesondere ≤ 0,4 mm, auf. Die von den Einschnitten 7 umschlossene Querschnittsfläche ist vorzugsweise zumindest annähernd rechteckig, insbesondere annähernd quadratisch.

Bei einem laufrichtungsgebunden gestalteten Laufstreifen, wie dargestellt, verlaufen die Einschnitte 7 in jeder Laufstreifenhälfte parallel zueinander, bei der gezeigten Ausführung parallel zur Erstreckung der die Profilblöcke 3 und 4 in Umfangsrichtung voneinander trennenden Umfangsrillen 2. Bei der gezeigten Ausführung verlaufen somit die weiteren Einschnitte 7 in der einen Laufstreifenhälfte bezüglich der Umfangsrichtung gegensinnig zu den weiteren Einschnitten 7 in der zweiten Laufstreifenhälfte. Der Normalabstand a der weiteren Einschnitte 7 beträgt 5 mm bis 14 mm, insbesondere maximal 10 mm. In jedem Profilblock 3, 4 sind somit zumindest zwei weitere Einschnitte 7, vorzugsweise drei weitere Einschnitte 7, ausgebildet. Die weiteren Einschnitte 7 durchqueren ferner die Profilblöcke 3, 4 und erstrecken sich daher von Diagonalrille 1 zu Diagonalrille 1.

### Bezugsziffernliste

- 1: Diagonalrille
- 2: Umfangsrille
- 3: schulterseitiger Profilblock
- 3a, 4a: Profilblockelement
- 4: mittiger Profilblock
- 5, 6: Einschnitt
- 7: Einschnitt
- B: Laufstreifenbreite
- b: Breite
- M-M: Umfangsmittellinie
- t: Tiefe
- α, β, γ: Winkel

## Patentansprüche

1. Fahrzeugluftreifen für Personenkraftwagen, insbesondere für den Einsatz unter winterlichen Fahrbedingungen, mit einem Laufstreifen mit Profilpositiven, insbesondere Profilblöcken (3, 4), sowie mit Profilnegativen, insbesondere Umfangsrillen (2), Querrillen oder Diagonalrillen (1), wobei in den Profilpositiven jeweils eine Anzahl von parallel zueinander verlaufenden Einschnitten (5, 6) mit einer Breite von 0,4 mm bis 0,6 mm ausgebildet ist, die sich unter einem Winkel (β) ≥ 50° zur Umfangsrichtung des Laufstreifens erstrecken,
wobei zumindest in den im mittleren Bereich des Laufstreifens angeordneten Profilpositiven weitere, die Profilpositive durchquerende, geradlinig verlaufende Einschnitte (7) ausgebildet sind, welche eine Tiefe (t) von 0,2 mm bis 0,5 mm aufweisen und in jedem Profilpositiv parallel zueinander verlaufen, wobei die weiteren Einschnitte (7) eine Breite (b) von 0,2 mm bis 0,5 mm aufweisen und zur Umfangsrichtung unter einem Winkel (γ) von ±5° bis ±15° verlaufen, und wobei der Normalabstand (a) der in einem Profilpositiv parallel zueinander verlaufenden weiteren Einschnitte (7) 5 mm bis 14 mm beträgt.

2. Fahrzeugluftreifen nach Anspruch 1, **dadurch gekennzeichnet, dass** die weiteren Einschnitte (7) in sämtlichen Profilpositiven ausgebildet sind.

3. Fahrzeugluftreifen nach Anspruch 1 oder 2, **dadurch gekennzeichnet, dass** die Tiefe (t) der weiteren Einschnitte (7) ≤ 0,4 mm beträgt.

4. Fahrzeugluftreifen nach einem der Ansprüche 1 bis 3, **dadurch gekennzeichnet, dass** die Breite (b) der weiteren Einschnitte (7) ≤ 0,4 mm beträgt.

5. Fahrzeugluftreifen nach einem der Ansprüche 1 bis 4, **dadurch gekennzeichnet, dass** die weiteren Einschnitte (7) in sämtlichen Profilpositiven einer Laufstreifenhälfte parallel zueinander verlaufen.

6. Fahrzeugluftreifen nach Anspruch 5, **dadurch gekennzeichnet, dass** der Normalabstand (a) der in einem Profilpositiv parallel zueinander verlaufenden weiteren Einschnitte (7) maximal 10 mm beträgt.

7. Fahrzeugluftreifen nach einem der Ansprüche 1 bis 6, **dadurch gekennzeichnet, dass** die von den weiteren Einschnitten (7) umschlossene Querschnittsfläche zumindest annähernd rechteckig, insbesondere zumindest annähernd quadratisch, ist.

## Claims

1. Pneumatic vehicle tyre for passenger cars, in particular for use under winter driving conditions, having a tread with profile positives, in particular profile blocks (3, 4), and with profile negatives, in particular circumferential grooves (2), transverse grooves or diagonal grooves (1), wherein a number of sipes (5, 6) extending parallel to one another and having a width of 0.4 mm to 0.6 mm are formed in each of the profile positives, said sipes (5, 6) extending at an angle (β) ≥ 50° to the circumferential direction of the tread, wherein, at least in the profile positives arranged in the central region of the tread, further, rectilinearly extending sipes (7) that cross the profile positives are formed, said sipes (7) having a depth (t) of 0.2 mm to 0.5 mm and extending parallel to one another in each profile positive,
wherein
the further sipes (7) have a width (b) of 0.2 mm to 0.5 mm and extend at an angle (γ) of ±5° to ±15° to the circumferential direction, and wherein the normal spacing (a) of the further sipes (7) extending parallel to one another in a profile positive is 5 mm to 14 mm.

2. Pneumatic vehicle tyre according to Claim 1, **characterized in that** the further sipes (7) are formed in all the profile positives.

3. Pneumatic vehicle tyre according to Claim 1 or 2, **characterized in that** the depth (t) of the further sipes (7) is ≤ 0.4 mm.

4. Pneumatic vehicle tyre according to one of Claims 1 to 3, **characterized in that** the width (b) of the further sipes (7) is ≤ 0.4 mm.

5. Pneumatic vehicle tyre according to one of Claims 1 to 4, **characterized in that** the further sipes (7) extend parallel to one another in all the profile positives of a tread half.

6. Pneumatic vehicle tyre according to Claim 5, **characterized in that** the normal spacing (a) of the further sipes (7) extending parallel to one another in a profile positive is at most 10 mm.

7. Pneumatic vehicle tyre according to one of Claims 1 to 6, **characterized in that** the cross-sectional area enclosed by the further sipes (7) is at least approximately rectangular, in particular at least approximately square.

## Revendications

1. Pneumatique de véhicule destiné à des voitures particulières, en particulier à une utilisation dans des conditions hivernales, le pneumatique comprenant une bande de roulement pourvu de profilés positifs, en particulier de blocs profilés (3, 4), ainsi que de profilés négatifs, en particulier des rainures circonférentielles (2), des rainures transversales ou des rainures diagonales (1), un certain nombre d'incisions (5, 6) qui s'étendent parallèlement les unes aux autres étant ménagées, lesquelles ont une largeur allant de 0,4 mm à 0,6 mm et s'étendent suivant un angle (β) ≥ 50° par rapport à la direction circonférentielle de la bande de roulement,
des incisions rectilignes (7) qui traversent les profilés positifs étant ménagées au moins dans les profilés positifs disposés dans la région centrale de la bande de roulement, lesquelles incisions ont une profondeur (t) allant de 0,2 mm à 0,5 mm et s'étendent parallèlement les unes aux autres dans chaque profilé positif, les autres incisions (7) ayant une largeur (b) allant de 0,2 mm à 0,5 mm et s'étendant par rapport à la direction circonférentielle suivant un angle (γ) de ± 5° à ± 15° et la distance normale (a) des autres incisions (7), qui s'étendent parallèlement les unes aux autres dans un profilé positif, étant comprise entre 5 mm et 14 mm.

2. Pneumatique de véhicule selon la revendication 1, **caractérisé en ce que** les autres incisions (7) sont ménagées dans tous les profilés positifs.

3. Pneumatique de véhicule selon la revendication 1 ou 2, **caractérisé en ce que** la profondeur (t) des autres incisions (7) étant ≤ 0,4 mm.

4. Pneumatique de véhicule selon l'une des revendications 1 à 3, **caractérisé en ce que** la largeur (b) des autres incisions (7) étant ≤ 0,4 mm.

5. Pneumatique de véhicule selon l'une des revendications 1 à 4, **caractérisé en ce que** les autres incisions (7) s'étendent parallèlement les unes aux autres dans tous les profilés positifs d'une moitié de bande de roulement.

6. Pneumatique de véhicule selon la revendication 5, **caractérisé en ce que** la distance normale (a) des autres incisions (7), qui s'étendent parallèlement les unes aux autres dans un profilé positif, est de 10 mm maximum.

7. Pneumatique de véhicule selon l'une des revendications 1 à 6, **caractérisé en ce que** la surface en coupe transversale, entourant les autres incisions (7), est au moins approximativement rectangulaire, en particulier au moins approximativement carrée.
